# EUROPEAN PATENT APPLICATION

(11) **EP 4 718 131 A1**
(43) Date of publication of application: **01.04.2026**
(21) Application number: 25203930.0
(22) Date of filing: 23.09.2025
(51) Int. Cl.: G02B 6/12, G02B 6/43

(54) **HIGH DENSITY 3D ELECTRICAL AND OPTICAL DIRECT BOND INTERCONNECT**

(30) Priority: 23.09.2024 US 202463697617 P; 17.09.2025 US 202519330902
(71) Applicant: II-VI Delaware, Inc., Wilmington, DE 19890 (US)
(72) Inventor: CHEN, Young-Kai, Wilmington, 19890 (US); TATARCZAK, Anna, Wilmington, 19890 (US)
(74) Representative: Schmidt, Christian

(57) **Abstract**

This disclosure describes a system for providing a high density three-dimensional electrical and optical direct bond interconnect. The system comprises an electro-optical interposer substrate and a waveguide operably coupled to the substrate. The waveguide comprises an electrical redistribution path that electrically couples at least one application-specific integrated circuit to a photonic integrated circuit, and an optical redistribution path that optically couples the circuits. The configuration enables micron-scale high density routing with both internal and external optical communication channels, allowing scalable integration of multiple electrical and optical devices.

## Description

### CROSS REFERENCE TO RELATED APPLICATIONS

This application claims priority to and the benefit of U.S. Provisional Patent Application No. 63/697,617 entitled "HIGH DENSITY 3D ELECTRICAL AND OPTICAL DIRECT BOND INTERCONNECT" filed September 23, 2024, which is hereby incorporated herein by reference in its entirety.

### BACKGROUND

Limitations and disadvantages of traditional optical connections will become apparent to one of skill in the art, through comparison of such approaches with some aspects of the present method and system set forth in the remainder of this disclosure with reference to the drawings.

### BRIEF SUMMARY

Systems and methods provide a high density 3D electrical and optical direct bond interconnect, substantially as illustrated by and/or described in connection with at least one of the figures, as set forth more completely in the claims.

### BRIEF DESCRIPTION OF THE DRAWINGS

FIG. 1 illustrates an example of a single-sided electrical-optical direct-bond interconnect, in accordance with various example implementations of this disclosure.
FIG. 2 illustrates an example of a double-sided electrical-optical direct-bond interconnect, in accordance with various example implementations of this disclosure.

### DETAILED DESCRIPTION

The figures illustrate a general manner of construction. Descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denotes the same elements.

The term "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

The terms "comprises," "comprising," "includes," and/or "including," are "open ended" terms and specify the presence of stated features, but do not preclude the presence or addition of one or more other features.

The terms "first," "second," *etc.* may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Also, any numerical range recited herein is intended to include all sub-ranges subsumed therein. For example, a range of "1 to 10" is intended to include any and all sub-ranges between and including the recited minimum value of 1 and the recited maximum value of 10, that is, all sub-ranges beginning with a minimum value equal to or greater than 1 and ending with a maximum value equal to or less than 10, and all sub-ranges in-between, e.g., 1 to 6.3, or 5.5 to 10, or 2.7 to 6.1.

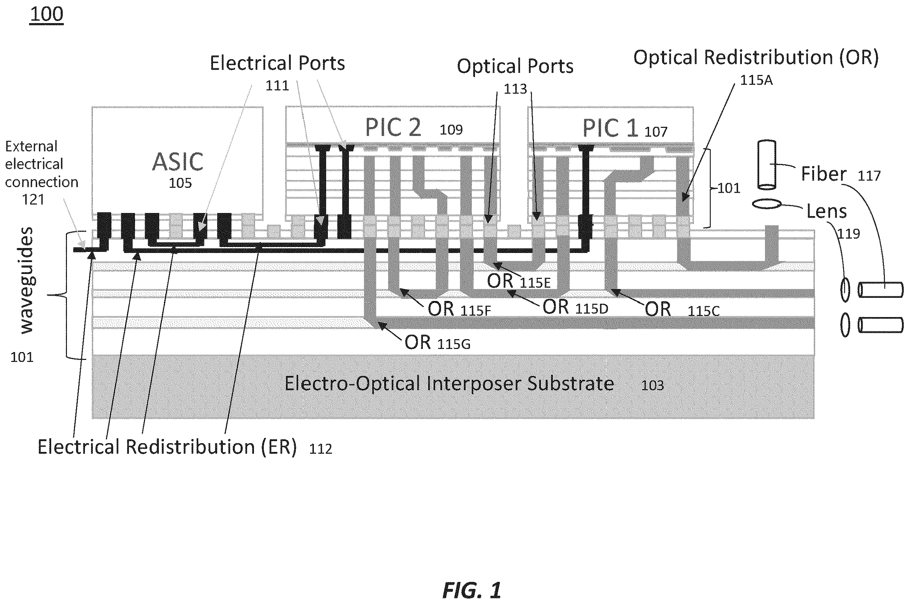

FIG. 1 illustrates an example of a single-sided electrical-optical direct-bond interconnect (EO-DBI) 100, in accordance with various example implementations of this disclosure.

The single-sided EO-DBI 100 comprises waveguides 101 on an electro-optical interposer substrate 103. The waveguides 101 comprise cladding with a low refractive index optical material. The electro-optical interposer substrate 103 may comprise silicon, glass, silicon carbide and/or other substrate material. The waveguides 101 may be operably coupled to one or more photonic integrated circuits (PICs) 107, 109.

The ASIC 105 and the PICs 107, 109 may be interconnected via electrical redistribution (ER) paths 112 and optical redistribution (OR) paths 115. Materials for the ER are electrically conductive. Materials for OR are optically transparent for the wavelength of interest and preferably have low optical loss. The single-sided EO-DBI 100 enables high density electrical and optical routing on a 3D integrated interposer platform. Micron-scale line width and pitch may be achieved via sizes delineated by lithography and microelectronic processes. High density direct-bonding of electrical ports 111 and optical ports 113 may be achieved at the interfaces of PICs 107, 109, ASIC 105 and waveguides 101.

The ER paths 112 may be on or within the waveguides 101. The ER paths 112 may operably couple the ASIC 105 and the PICs 107, 109 via electrical ports 111 made of conducting material.

The OR paths 115 comprise high relative refractive index optical material within the waveguides 101. The high relative refractive index optical materials may be poly-crystalline silicon materials, amorphous silicon materials, silicon nitride or other materials with a large refractive index in contrast to the low refractive index cladding material. The ASIC 105 and the PICs 107, 109 may be operably coupled via the OR paths 115 and optical ports 113 made of high index optical material that enables direct bonding.

OR path 115A illustrates an external communication channel to PIC 1 107 via, for example, a lens 119 and fiber 117 above the waveguide 101. OR path 115C illustrates an external communication channel to PIC 1 107 via, for example, a lens 119 and fiber 117 adjacent to the waveguide 101. OR paths 115D, 115E illustrate internal communication channels between PIC 1 107 and PIC 2 109. OR path 115F illustrates internal communication channels from PIC 2 109 to PIC 2 109. OR path 115G illustrates an external communication channel to PIC 2 107 via, for example, a lens 119 and fiber 117 adjacent to the waveguide 101. An ER path 112 may also comprise an external electrical connection 121.

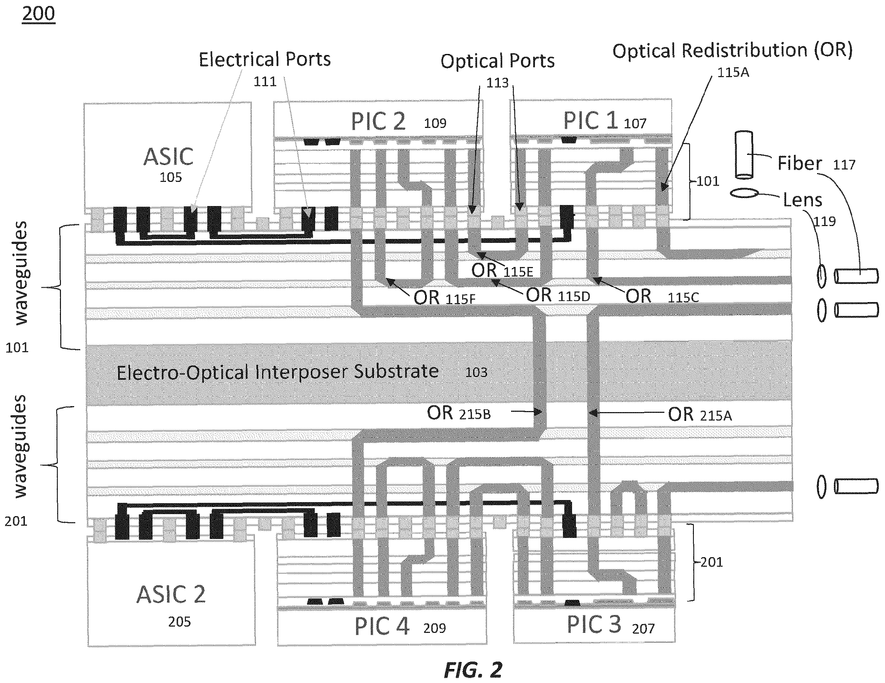

FIG. 2 illustrates an example double-sided EO-DBI 200, in accordance with various example implementations of this disclosure.

In addition to the elements of the single-sided EO-DBI 100, the double-sided EO-DBI 200 comprises waveguides 201 below the electro-optical interposer substrate 103. The interposer thickness may be, for example, tens of microns to a millimeter depending on the mechanical dimensions. For high speed optical communications, the interposer thickness would be generally thinner.

The waveguides 201 may be operably coupled to at least one ASIC 205 and one or more PICs 207, 209.

OR path 215A illustrates an external communication channel, through the substrate 103, to PIC 3 207 via, for example, a lens 119 and fiber 117 adjacent to the waveguide 101. OR path 215B illustrates a channel, through substrate 103, that distributes optical communication between PIC 2 109 and PIC 4 209.

A system in accordance with various embodiments of the disclosure comprises an electro-optical interposer substrate and a waveguide. The waveguide is disposed on the electro-optical interposer substrate and comprises an electrical redistribution (ER) path configured to operably couple an application-specific integrated circuit (ASIC) to a photonic integrated circuit (PIC), and an optical redistribution (OR) path configured to optically couple the ASIC to the PIC.

In various embodiments of the system, the waveguide comprises cladding of a low refractive index optical material.

In various embodiments of the system, the OR path comprises a high refractive index material comprising one or more of poly-crystalline silicon, amorphous silicon, and silicon nitride.

In various embodiments of the system, the ER path is placed, located, deposited, or otherwise disposed within the waveguide, and/or the ER path comprises a conductive material forming electrical ports.

In various embodiments of the system, the OR path is configured to provide external optical communication via a lens and an optical fiber, or the OR path is configured to provide internal optical communication between a first PIC and a second PIC.

In various embodiments of the system, the waveguide is operably coupled to at least one ASIC and a plurality of PICs.

In various embodiments of the system, the electro-optical interposer substrate comprises one or both of silicon and glass.

In various embodiments of the system, the ER path and the OR path are configured for micron-scale line width and pitch defined by lithographic processing.

A further system in accordance with various embodiments of the disclosure comprises an electro-optical interposer substrate, a first waveguide disposed on a first surface of the electro-optical interposer substrate, and a second waveguide disposed on a second surface of the electro-optical interposer substrate opposite the first surface. The first waveguide and the second waveguide each comprise an electrical redistribution (ER) path and an optical redistribution (OR) path for interconnecting at least one ASIC and a plurality of PICs.

In various embodiments of the further system, the second waveguide is configured for optical communication through the substrate to a PIC on the first surface, or the second waveguide is configured for optical communication through the substrate between a first PIC and a second PIC disposed on opposite sides of the substrate.

In various embodiments of the further system, the ER paths of the first and second waveguides provide electrical coupling between multiple ASICs disposed on opposing sides of the substrate.

In various embodiments of the further system, the OR paths of the first waveguide and the second waveguide comprise optical ports comprising a high refractive index material for direct bonding.

In various embodiments of the further system, the first waveguide comprises an external optical communication path via a lens and optical fiber, and/or the second waveguide comprises an internal optical communication path between multiple PICs disposed on opposite sides of the substrate.

In various embodiments of the further system, the first waveguide and the second waveguide each comprise cladding with a low refractive index optical material.

In various embodiments of the further system, the electro-optical interposer substrate comprises one or both of silicon and glass.

In various embodiments of the further system, high density direct-bonding of electrical ports and optical ports are enabled at a plurality of interfaces of the at least one ASIC and the plurality of PICs.

In various embodiments, an interface between the electro-optical interposer substrate waveguides and the ASICs and/or PICs may comprise either an air gap or a dielectric material. The choice of interface material may be used to optimize optical confinement, mechanical stability, and coupling efficiency between the electrical-optical elements.

In various embodiments, die attach between a chip (e.g., ASIC or PIC) and the substrate may be accomplished using direct bonding or state-of-the-art micro solder bump bonding techniques. Direct bonding may be advantageous for minimizing thermal resistance and achieving high density port alignment, while micro solder bumps may provide mechanical compliance and reworkability.

In various embodiments, optical coupling tolerances may be ensured by design, for example through evanescent coupling structures such as tapered waveguides formed between the interposer and the photonic device. Additional optical coupling implementations may include the use of micro-optics such as micro-lenses, gratings, or waveguide tapers that facilitate efficient coupling of light between on-chip and off-chip photonic structures.

In some embodiments, micro-fabricated lenses may be employed to provide free-space coupling between optical ports and optical fibers. These lenses may be lithographically defined and integrated with the interposer to maintain precise alignment with optical redistribution paths.

In various embodiments, evanescent coupling may be achieved by positioning a tapered waveguide of a first chip in close proximity to a tapered waveguide of a second chip, such that an overlapping evanescent field enables efficient optical power transfer. This structure may be fabricated directly on the interposer substrate or formed across bonded chips.

In various embodiments, a PIC may be placed either inside a recess cavity formed within the waveguide substrate or on the surface of the waveguide substrate. Recessed placement may improve optical alignment tolerances, thermal management, and reduce parasitic effects, whereas surface placement may simplify fabrication and allow post-processing integration.

The figures described herein are cross-sectional schematic views, and the waveguides and redistribution paths (both ER and OR) may be routed in two dimensions across the substrate plane. While the figures illustrate one-dimensional routing for clarity, in practice the routing may be implemented in multiple directions across the interposer surface to achieve high density interconnect layouts.

While the present method and/or system have been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system is not limited to the implementations disclosed, but that the present method and/or system will include all implementations falling within the scope of the appended claims.

## Claims

1. A system, comprising:
an electro-optical interposer substrate; and
a waveguide, disposed on the electro-optical interposer substrate, comprising:
an electrical redistribution (ER) path configured to operably couple an application-specific integrated circuit (ASIC) to a photonic integrated circuit (PIC), and
an optical redistribution (OR) path configured to optically couple to the PIC.

2. The system of claim 1, wherein the waveguide comprises cladding of a low refractive index optical material.

3. The system of claim 1, wherein the OR path comprises a high refractive index material comprising one or more of poly-crystalline silicon, amorphous silicon, and silicon nitride.

4. The system of claim 1, wherein the ER path is disposed within the waveguide.

5. The system of claim 1, wherein the ER path comprises a conductive material forming electrical ports.

6. The system of claim 1, wherein the OR path is configured to provide external optical communication via a lens and an optical fiber.

7. The system of claim 1, wherein the OR path is configured to provide internal optical communication between a first PIC and a second PIC.

8. The system of claim 1, wherein the waveguide is operably coupled to at least one ASIC and a plurality of PICs.

9. The system of claim 1, wherein the electro-optical interposer substrate comprises one or both of silicon and glass.

10. The system of claim 1, wherein the ER path and the OR path are configured for micron-scale line width and pitch defined by lithographic processing.

11. A system, comprising:
an electro-optical interposer substrate;
a first waveguide disposed on a first surface of the electro-optical interposer substrate; and
a second waveguide disposed on a second surface of the electro-optical interposer substrate opposite the first surface, wherein the first waveguide and the second waveguide each comprise an electrical redistribution (ER) path and an optical redistribution (OR) path for interconnecting at least one ASIC and a plurality of PICs.

12. The system of claim 11, wherein the second waveguide is configured for optical communication through the substrate to a PIC on the first surface.

13. The system of claim 11, wherein the second waveguide is configured for optical communication through the substrate between a first PIC and a second PIC disposed on opposite sides of the substrate.

14. The system of claim 11, wherein the ER paths of the first and second waveguides provide electrical coupling between multiple ASICs disposed on opposing sides of the substrate.

15. The system of claim 11, wherein the OR paths of the first waveguide and the second waveguide comprise optical ports comprising a high refractive index material for direct bonding.

16. The system of claim 11, wherein the first waveguide comprises an external optical communication path via a lens and optical fiber.

17. The system of claim 11, wherein the second waveguide comprises an internal optical communication path between multiple PICs disposed on opposite sides of the substrate.

18. The system of claim 11, wherein the first waveguide and the second waveguide each comprise cladding with a low refractive index optical material.

19. The system of claim 11, wherein the electro-optical interposer substrate comprises one or both of silicon and glass.

20. The system of claim 11, wherein the system enables high density direct-bonding of electrical ports and optical ports at a plurality of interfaces of the at least one ASIC and the plurality of PICs.
